# EUROPEAN PATENT SPECIFICATION

(11) **EP 3 992 591 B1**
(45) Date of publication and mention of the grant of the patent: **03.07.2024**
(21) Application number: 21204560.3
(22) Date of filing: 25.10.2021
(51) Int. Cl.: B65F 1/16, G01S 7/00, G01S 17/08, G01S 17/88, G01F 15/18, B65F 1/14, G01F 23/292

(54) **DETECTION DEVICE FOR CONTAINER FILLING**
DETEKTIONSVORRICHTUNG FÜR EINE BEHÄLTERBEFÜLLUNG
DISPOSITIF DE DÉTECTION POUR LE REMPLISSAGE D'UN RÉCIPIENT

(30) Priority: 30.10.2020 IT 202000025903
(43) Date of publication of application: 04.05.2022
(73) Proprietor: Optimon S.r.l., 21049 Tradate (VA) (IT)
(72) Inventor: CAIATA, Vito, Tradate (VA) (IT); CESARIO, Michele, Tradate (VA) (IT)
(74) Representative: Lunati & Mazzoni S.r.L.

(56) References cited:
- EP-A1- 3 411 674
- EP-B1- 3 411 674
- WO-A1-2020/060421
- WO-A1-2020/102879
- CN-A- 108 750 444
- JP-U- S57 179 126
- US-A1- 2007 114 343

## Description

The present invention relates to a detection device for container filling of the type specified in the preamble of the first claim.

Similar devices are described in patent applications CN-A-108750444, EP-A-3411674, WO-A-2020/060421, WO-A-2020/102879, JP-U-S57179126 and US-A-2007/114343.

Various devices are currently known which are suitable for measuring the filling level of containers, for example of baskets or similar.

They are suitable, for example, to communicate with a remote operator the level of fullness of a basket, so that it is possible to empty only when the basket is full without having to carry out empty trips by the operator.

For example, patent application US 2008/0126473 A1 describes a system for evaluating the filling of baskets equipped with three meters placed parallel to the ground and suitable for verifying whether the content has reached the level of the measuring device. The said solution is very complex and involves the production of baskets which are expensive.

Patent application WO 2018/073075 A1, on the other hand, describes containers combined with fullness level readers linked to street lamps, close to the baskets themselves. This system does not have the costs of the previous ones, however it works exclusively for the baskets next to the street lamps.

Patent application WO 2019/040946 A1 instead describes waste containers equipped with a laser sensor of the filling level inside the lid of the container itself. These sensors can only be used in containers with a lid. Furthermore, the sensor risks being damaged by opening and closing the basket. The known technique described therefore comprises the aforementioned drawbacks.

In particular, the known devices are expensive.

Furthermore, the known devices are applicable only in particular conditions, for example in circumstances in which the baskets have a lid, or when the baskets are combined with poles or similar.

In this situation, the technical task underlying the present invention is to devise a detection device for container filling capable of substantially obviating at least part of the aforementioned drawbacks.

Within the scope of said technical task, an important object of the invention is to obtain a detection device for container filling which is simple and economical. Another important object of the invention is to provide a detection device for container filling that can be applied in particular and different conditions of use. Yet another important object of the invention is to provide a detection device for container filling which can accurately measure the quantity of waste.

The technical task and the specified aims are achieved by a detection device for container filling as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:
the **Fig. 1** shows a schematic drawing in perspective of a detection device for filling containers according to the invention; and
the **Fig. 2** shows a schematic side view, and partially in section, of a detection device for filling containers;
the **Fig. 3** illustrates a schematic side view, and partially in section, of a detection device for filling containers.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the detection device according to the invention is globally indicated with the number **1.**

It is particularly suitable for detecting the containers filling 10, in particular of containers consisting of garbage baskets of the public waste collection system. For example, in Italy the public waste collection system is organized by the municipalities and therefore the baskets, at least in the municipality, all have dimensions and supports of one or more predetermined measures and are emptied and administered by the same company.

The detection device is also applicable to any container, for example we have use cases in the industrial field to detect the filling of the baskets of components to be assembled.

In particular, the container 10 consists of an open garbage basket, or rather without a lid attached to a support pole **11,** specially made to support the container 10. The pole 11, for example common for supporting containers in Italy, defines a longitudinal cavity **11a,** it is therefore conveniently constituted by a hollow tube. The pole 11, the container 10, and the detection device 1 together form a waste collection apparatus **12.**

The detection device 1 comprises, at the very top, a tubular portion **2,** which can be fixed to the pole 11 or support, and a measuring portion **3,** which is constrained to the tubular portion 2.

Externally, the support device 1 is suitably closed by a single body, even if it can be opened, in polymeric material, made with materials and joints known to them.

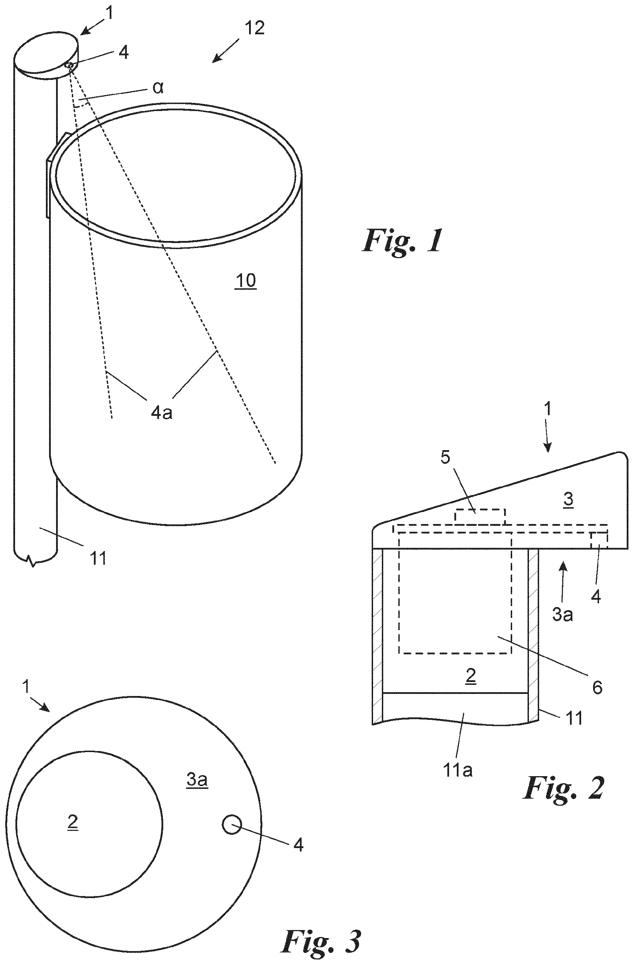

Furthermore, the tubular portion 2 preferably has a shape and dimension counter-shaped to the longitudinal cavity 11a, in particular to its normal section, so that it can be constrained to the latter by interlocking, as illustrated in Figs. 1 and 2. More in detail, the cross section of the tubular portion 2 is circular with a diameter corresponding to the internal diameter of the longitudinal cavity 11a, so that the tubular portion 2 can be inserted by interlocking inside the longitudinal cavity 11a. Finally, the tubular portion preferably has a height of the same order of magnitude as the diameter.

The measuring portion 3 preferably geometrically protrudes horizontally diametrically from the tubular portion 2 defining a free area **3a** of the measuring portion 3, in use facing the ground.

The measuring portion 3 comprises a laser measurer **4** of distance, suitable for measuring distances in the order of magnitude of tens of centimetres or similar, preferably up to 4 m with a resolution of 0.1mm. This measurer is known per se and is also known as a laser rangefinder. They comprise means for emitting a laser light and for receiving means. For example, laser rangefinders are manufactured by the Leica^{®} company or by other companies, for example Tacklife HD50M.

The laser measurer 4 is suitably facing the free zone 3a and therefore the ground and the underlying container 10. The detection device 1 is in fact preferably above the container 10.

The laser measurer 4 is configured to measure the distance between the laser measurer 4 itself, or rather the area in which the said laser emits, and the first obstacle surface to the laser light emitted by said laser measurer 4. This measurement takes place along a plurality of directions **4a.**

The said directions 4a, moreover, reciprocally form, starting from the laser measurer 4, an angle **α** maximum of at least 10°, more preferably of at least 20°, more preferably still of a third of a right angle and more preferably still of about 30°. Furthermore, the value of the angle α is adjustable, as well as the absolute maximum and minimum value, or the average value of the inclination of the direction 4a with respect to the gravitational gradient. The angle α is adjustable by rotation of the laser measurer. The angle α is preferably adjustable by software setting.

The detection device 1 further comprises control means of the electronic type, known per se and suitable for governing the measuring device 1 and the various devices it includes. Such electronic control means can be, for example, a specially engineered electronic board or a microcomputer of the Arduino^{®} or Raspberry^{®} type or even more.

The detection device 1 further comprises electrical power supply means, such as a connection to the network or a battery 6 or, perhaps, recharging means such as a solar panel or recharging sockets or wireless recharging means or similar. The battery preferably allows a multi-year duration without the need for recharging. The detection device 1 further comprises data connection means 5 with the outside, connected to the laser meter 4, with the control means and preferably connectable with the outside.

More in detail, the data connection means 5 can comprise wireless connections such as GSM, or various versions of remote communications via typically used by smartphones, or even Bluetooth^{®}, WI-FI, NFC, LPWAN networks (nb-iot, LoRaWAN and Sigfox), BLE and similar

They are preferably adapted to communicate with an external and remote-control unit, for example via GSM and similar, the fullness level of the container 10 measured by the laser measurer 4. The data connection means 5 are therefore preferably configured to communicate periodically, at the remote location, its degree of filling, together with other information such as temperature and overturning alarms.

Furthermore, the data connection means 5 can be adapted to connect with an electronic device, such as smartphone, tablet or notebook, for example via NFC, to allow the adjustment of the detection device 1 itself, for example the adjustment of the full signalling or of the inclination of the laser or even more.

The operation of the detection device 1 previously described in structural terms is as follows.

It is preferably fitted by friction in the longitudinal cavity 11a of the pole 11, preferably secured with a rivet, which supports the container 10, preferably a garbage basket, or in any case constrained in correspondence with the container, for example under a lid, so that the free area 3a faces the inside of the container 10.

The detection device 1 can also be a panel.

It can also be installed on lids, including metallic ones, keeping the measuring portion 3 preferably outside the lid so as not to be shielded by the latter and to be able to be constrained also to the metal lids.

The detection device 1 is connected to the electronic device such as a smartphone or tablet and adjusted by means of said smartphone or tablet. In particular, the overflow level, the directions 4a and the angle α are imported.

The detection device 1 is therefore connected to a remote central office, preferably of the entity that manages the waste collection. It therefore periodically communicates the filling level of the baskets to the same office. For example, if the filling level exceeds 80%, the detection device 1 communicates with the remote office which sends an operator to empty the basket.

The detection device 1 according to the invention achieves important advantages. In fact, the same can be simply applied on particular types of containers 10 consisting of garbage baskets or also in other conditions of use.

Another important advantage is that the detection device 1 can accurately measure the quantity of waste present.

Finally, the detection device 1 is simple and economical.

## Claims

1. Detection device (1) for container filling (10) comprising:
- a tubular portion (2) configured to be fixed to a pole (11) or to a support,
- a measuring portion (3) constrained to said tubular portion (2) and horizontally diametrically protruding from said tubular portion (2) defining a free area (3a) of said measuring portion (3) facing the ground, and comprising:
- data connection means (5) with the outside,
- a laser measurer (4) configured to measure the distance between said laser measurer (4) and a first obstacle surface to the laser light emitted by said laser measurer (4),
- control means of the electronic type suitable for governing the detection device (1),
**characterized in that**
- the laser light is emitted by said laser measurer (4) along a plurality of directions (4a), reciprocally forming, starting from said laser measurer (4), an angle (α) having a maximum value of at least 10°,
and **in that**
- said angle (α) is adjustable by rotation of said laser measurer (4),
and **in that**
- the maximum and minimum absolute value or the average value of the inclination of said directions (4a) with respect to the gravitational gradient, is adjustable.

2. Detection device (1) according to claim 1, wherein said angle (α) has a maximum value of at least 20°.

3. Detection device (1) according to claim 1, wherein said angle (α) has a maximum value of one third of right angle.

4. Detection device (1) according to any one of the preceding claims, wherein said data connection means (5) comprise wireless data communication means.

5. Detection device (1) according to any one of the preceding claims, wherein said data connection means (5) are configured to periodically communicate, to a remote station, its degree of filling.

6. Detection device (1) according to any one of the preceding claims, wherein said data connection means (5) are configured to communicate with an electronic device disposed in proximity of said detection device (1) so as to allow adjustment of said device.

7. Detection device (1) according to one of the preceding claims, wherein said tubular portion (2) has a circular cross-section with a diameter corresponding to the internal diameter of the poles for supporting containers (10) consisting of garbage cans of the public waste collection system.

8. Waste collection apparatus (12) comprising a supporting pole (11) defining a longitudinal cavity (11a), a waste container and a detection device (1) according to any one of the preceding claims, in which said detection device (1) is constrained to said pole (11) by means of the interlocking insertion of said tubular portion (2) inside said longitudinal cavity (11a) and said free area (3a) is turned towards the inside of said container (10).

## Patentansprüche

1. Erfassungsvorrichtung (1) zum Befüllen von Behältern (10) umfassend:
- einen Rohrabschnitt (2), der so konfiguriert ist, dass er an einem Pfahl (11) oder an einer Halterung befestigt wird,
- einen Messabschnitt (3), der mit dem Rohrabschnitt (2) festgebunden ist und horizontal diametral aus dem Rohrabschnitt (2) vorsteht, wobei ein freier Bereich (3a) des Messabschnittes (3) definiert wird, der sich auf den Boden richtet und umfassend:
- Verbindungsmittel zur Datenübertragung (5) nach Außen,
- einen Lasermesser (4), der so konfiguriert ist, dass er den Abstand zwischen dem Lasermesser (4) und einer ersten Hindernisoberfläche dem vom Lasermesser (4) ausgesendeten Laserlicht misst,
- elektronische Steuerungsmittel, die geeignet sind, die Erfassungsvorrichtung (1) zu steuern,
**gekennzeichnet dadurch, dass:**
- das Laserlicht in einer Mehrzahl von Richtungen (4a) durch den Lasermesser (4) ausgesendet wird, die gegenseitig, ausgehend von dem Lasermesser (4), einen Winkel (*α*) bilden, der einen Maximalwert von mindestens 10° aufweist,
**und dadurch,** dass
- der Winkel (*α*) durch Drehung des Lasermessers (4) einstellbar ist,
**und dadurch,** dass
- der maximale und minimale Absolutwert oder der Mittelwert der Neigung der Richtungen (4a) in Bezug auf den Schwerkraftgradienten einstellbar ist.

2. Erfassungsvorrichtung (1) nach Anspruch 1, wobei der Winkel (*α*) einen Maximalwert von mindestens 20° aufweist.

3. Erfassungsvorrichtung (1) nach Anspruch 1, wobei der Winkel (*α*) einen Maximalwert aufweist, der ein Drittel eines rechten Winkels beträgt.

4. Erfassungsvorrichtung (1) nach einem der vorhergehenden Ansprüche, wobei die Verbindungsmittel zur Datenübertragung (5) drahtlose Datenkommunikationsmittel umfassen.

5. Erfassungsvorrichtung (1) nach einem der vorhergehenden Ansprüche, wobei die Verbindungsmittel zur Datenübertragung (5) so konfiguriert sind, dass sie periodisch seinen Füllstand an eine entfernte Station mitteilen.

6. Erfassungsvorrichtung (1) nach einem der vorhergehenden Ansprüche, wobei die Verbindungsmittel zur Datenübertragung (5) so konfiguriert sind, dass sie mit einer in der Nähe der Erfassungsvorrichtung (1) angeordneten elektronischen Vorrichtung kommunizieren, um die Einstellung der Vorrichtung zu ermöglichen.

7. Erfassungsvorrichtung (1) nach einem der vorhergehenden Ansprüche, wobei der Rohrabschnitt (2) einen kreisförmigen Querschnitt mit einem Durchmesser aufweist, der dem Innendurchmesser der Pfähle zur Unterstützung von Behältern (10) entspricht, die aus Mülleimern des öffentlichen Abfallsammelsystems bestehen.

8. Abfallsammelapparat (12) umfassend einen Stützpfahl (11), der einen Längshöhlraum (11a) definiert, einen Abfallbehälter und eine Erfassungsvorrichtung (1) nach einem der vorhergehenden Ansprüche, wobei die Erfassungsvorrichtung (1) mittels der einrastenden Einführung des Rohrabschnitts (2) in den Längshöhlraum (11a) mit dem Pfahl (11) festgebunden ist und der freie Bereich (3a) nach innen auf den Behälter (10) gerichtet wird.

## Revendications

1. Dispositif de détection (1) pour le remplissage de conteneur (10) comprenant:
- une partie tubulaire (2) configurée pour être fixée à un poteau (11) ou à un support,
- une partie de mesure (3) contrainte à ladite partie tubulaire (2) et dépassant horizontalement diamétralement de ladite partie tubulaire (2) définissant une zone libre (3a) de ladite partie de mesure (3) orientée vers le sol, et comprenant :
- des moyens de connexion de données (5) avec l'extérieur,
- un mesureur laser (4) configuré pour mesurer la distance entre ledit mesureur laser (4) et une première surface obstacle à la lumière laser émise par ledit mesureur laser (4),
- des moyens de commande de type électronique appropriés pour gouverner le dispositif de détection (1),
**caractérisé en ce que** :
- la lumière laser est émise par ledit mesureur laser (4) le long d'une pluralité de directions (4a), formant réciproquement, à partir dudit mesureur laser (4), un angle (*α*) ayant une valeur maximale d'au moins 10°,
et **en ce que**
- ledit angle (*α*) est ajustable par rotation dudit mesureur laser (4),
et **en ce que**
- la valeur absolue maximale et minimale ou la valeur moyenne de l'inclinaison desdites directions (4a) par rapport au gradient gravitationnel, est ajustable.

2. Dispositif de détection (1) selon la revendication 1, dans lequel ledit angle (*α*) a une valeur maximale d'au moins 20°.

3. Dispositif de détection (1) selon la revendication 1, dans lequel ledit angle (*α*) a une valeur maximale d'un tiers d'angle droit.

4. Dispositif de détection (1) selon l'une quelconque des revendications précédentes, dans lequel lesdits moyens de connexion de données (5) comprennent des moyens de communication de données sans fil.

5. Dispositif de détection (1) selon l'une quelconque des revendications précédentes, dans lequel lesdits moyens de connexion de données (5) sont configurés pour communiquer périodiquement, à une station distante, son degré de remplissage.

6. Dispositif de détection (1) selon l'une quelconque des revendications précédentes, dans lequel lesdits moyens de connexion de données (5) sont configurés pour communiquer avec un dispositif électronique disposé à proximité dudit dispositif de détection (1) de manière à permettre le réglage dudit dispositif.

7. Dispositif de détection (1) selon l'une quelconque des revendications précédentes, dans lequel ladite partie tubulaire (2) a une section transversale circulaire avec un diamètre correspondant au diamètre interne des poteaux de soutien de conteneurs (10) constitués de poubelles du système de collecte des déchets publics.

8. Appareil de collecte des déchets (12) comprenant un poteau de support (11) définissant une cavité longitudinale (11a), un conteneur de déchets et un dispositif de détection (1) selon l'une quelconque des revendications précédentes, dans lequel ledit dispositif de détection (1) est contraint audit poteau (11) au moyen de l'insertion à encliquetage de ladite partie tubulaire (2) à l'intérieur de ladite cavité longitudinale (11a) et ladite zone libre (3a) est tournée vers l'intérieur dudit conteneur (10).
